# EUROPEAN PATENT SPECIFICATION

(11) **EP 2 466 804 B1**
(45) Date of publication and mention of the grant of the patent: **14.11.2018**
(21) Application number: 10853946.1
(22) Date of filing: 27.09.2010
(51) Int. Cl.: H04L 12/437

(54) **PROTECTION SWITCHING METHOD FOR ETHERNET AUTOMATIC PROTECTION SWITCHING (EAPS) RING NETWORK AND MASTER NODE IN EAPS RING NETWORK**
SCHUTZSCHALTVERFAHREN FÜR EIN EAPS-RINGNETZWERK UND MASTERKNOTEN IN EINEM EAPS-RINGNETZWERK
PROCÉDÉ DE COMMUTATION DE PROTECTION POUR UN RÉSEAU EN ANNEAU À COMMUTATION DE PROTECTION AUTOMATIQUE ETHERNET (EAPS) ET N UD MAÎTRE DANS UN RÉSEAU EN ANNEAU EAPS

(30) Priority: 30.06.2010 CN 201010216823
(43) Date of publication of application: 20.06.2012
(73) Proprietor: ZTE Corporation, Shenzhen, Guangdong 518057 (CN)
(72) Inventor: LIU, Yang, Shenzhen Guangdong 518057 (CN); XIE, Tiemin, Shenzhen Guangdong 518057 (CN)
(74) Representative: Grey, Ian Michael
(86) International application number: PCT/CN2010/077376
(87) International publication number: WO 2012/000243

(56) References cited:
- WO-A2-2009/101531
- CN-A- 101 072 154
- US-A1- 2009 207 726
- US-B1- 6 766 482

## Description

### Technical Field

The present invention relates to the communication technology, and more especially, to a protection switching method for an Ethernet Automatic Protection Switching (EAPS) ring network and a master node in the EAPS ring network.

### Background of the Related Art

The EAPS is an Ethernet ring protection technique raised by the Extreme Networks, Inc. and is standardized to be RFC3619 by the Internet Engineering Task Force (IETF) in 2003. The EAPS technique can build a highly reliable Metropolitan Area Network (MAN) and a Local Area Network (LAN) with lower costs.

The main technical characteristics of the EAPS comprise specifically that: a failure restoration time less than one second (usually within 50 milliseconds) can provide a quick failure restoration capability similar to the quick failure restoration capability of the Synchronous Optical Network (SONET) ring; each segment node in the ring network can be upgraded independently, and the interface rate of each node in the ring network is not necessarily the same; the physical ring and logical domain can be independent from each other; capacity of quickly positioning a failure network segment or failure node is possessed; IP routing protocols such as Open Shortest Path First (OSPF), Border Gateway Protocol (BGP), etc. are supported.

The EAPS ring network comprises a master node and a plurality of transmitting nodes, as well as corresponding controlling Virtual Local Area Network (VLAN) and protected VLAN. The state of the EAPS ring network is divided into two kinds: a Complete state and a Failed state. Each EAPS node has two ports, namely, a primary port and a secondary port respectively. An EAPS protocol has three timers, which are configured to respectively monitor the following three periods: the interval of the master node sending a hello message, the master node detection fail-period and transmitting node pre-forward period.

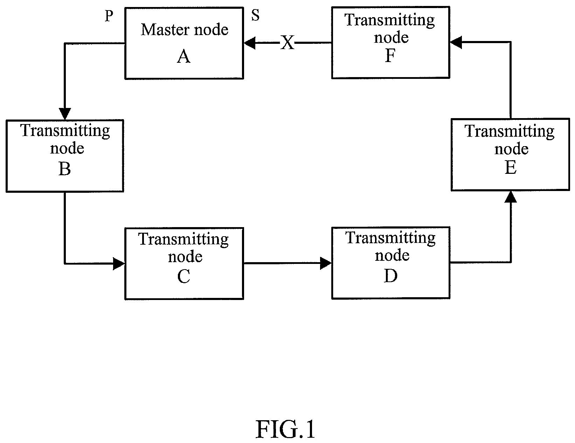

The working principle of the EAPS is as shown in FIG. 1. A typical EAPS ring network is equivalent to the topology of a physical ring. In the Complete state, the master node logically opens the primary port P, blocks the secondary port S, and does not allow to forward messages via the port, which ensures link disconnection of the ring network logically and avoids a service loop. The EAPS ring network protection detects the connectedness of the EAPS ring network and performs a rapid protection through an alerting mechanism, polling mechanism and ring network switching mechanism.

Alerting mechanism: when detecting the link connected between the primary port and secondary port on the master node has a fault, the transmitting node must send a link down message to the master node. After receiving the link down message, the master node judges that the ring network state changes from Complete to Failed, opens the secondary port, refreshes its own forwarding table, and sends a flush message via the primary port and secondary port to inform the transmitting node to perform switching (refreshing the forwarding table, and relearning the Media Access Control (MAC) address).

Polling mechanism: the master node periodically sends a ring network health detection message (e.g. a hello message) from the primary port by controlling the VLAN. In the Complete state, the health detection message reaches the secondary port of the master node through the forwarding of each transmitting node. If the secondary port S does not receive the hello message before the detection fail-period timer times out, the master node considers that the ring network has a fault, opens the secondary port, refreshes its own forwarding table, and sends a flush message via the secondary port to inform the transmitting node to perform switching (refreshing the forwarding table, and relearning the MAC address).

Restoration mechanism: the master node receives a hello message at the secondary port S, and judges that the state of the ring network returns to normal. If the ring network is in a Failed state currently, the master node will perform a switching. The master node blocks the secondary port, refreshes its own forwarding table, and sends a flush message to all the transmitting nodes to inform the transmitting nodes to perform switching (refreshing the forwarding table, and relearning the MAC address).

The above detection mechanisms have the following disadvantages specifically: in the condition of link quality reduction, the message transmission has a time delay, and if the master node does not receive the hello message before the fail-period timer times out, the ring network is considered to have a fault and protection switching will be performed; if the hello message reaches the secondary port of the master node after the time delay, the master node will consider that the failure has been removed, perform restoration switching once, and return to the Complete state; later if the master node still does not receive the hello message within the next fail-period due to the time delay again, the ring network will be re-considered to have a fault and protection switching will be performed again. It can be seen that the detection message received by the master node at the secondary port S can not indicate that the failure has been removed in the condition of link quality reduction.

The features of the preamble of the independent claims are known from US2009207726A1 or US6766482B1.

### Summary of the Invention

The technical problem to be solved by the present invention is to provide a protection switching method for an Ethernet Automatic Protection Switching (EAPS) ring network and a master node in the EAPS ring network as defined in the independent claims, to solve the defect that each node in the ring network performs an unnecessary network operation in the condition of link quality reduction and presence of time delay of the message transmission.

In order to solve the above problem, the present invention provides a protection switching method for an EAPS ring network, which comprises:
after receiving a ring network health detection message at a secondary port of a master node, if judging that the ring network in which the master node is located is in a Failed state currently, the master node starting to count a number of the ring network health detection messages received by the secondary port in a preset period, and if the counted number is greater than or equal to a preset threshold, then performing a restoration switching operation.

The above method further comprises:
a value of the preset period is greater than or equal to a sending period of the ring network health detection message and is less than or equal to a detection fail-period and a pre-forward period of a transmitting node.

The above method can be further characterized in that:
the preset threshold is equal to 1.

The above method can be further characterized in that:
the step of the master node performing the restoration switching operation comprises: the master node restoring a current state of the ring network to a Complete state, and the master node performing switching, blocking the secondary port, refreshing a forwarding table of the current node, and respectively sending a flush message via the primary port and the secondary port to inform all transmitting nodes in the current ring network to perform switching.

The present invention further provides a master node in an EAPS ring network, which comprises: a secondary port module, a state judgment module, a count module and a restoration module;
the secondary port module is configured to: initiate a state detection command to the state judgment module after receiving a ring network health detection message;
the state judgment module is configured to: judge a state of the ring network in which the master node is located currently after receiving the state detection command; if judging that the ring network is in a Failed state currently, initiate a count command to the count module;
the count module is configured to: start to count a number of the ring network health detection messages received by the secondary port module in a preset period after receiving the count command, and if judging that the counted number is greater than or equal to a preset threshold, initiate a restoration command to the restoration module;
the restoration module is configured to: perform a restoration switching operation on the ring network after receiving the restoration command.

The above master node can be further characterized in that:
the count module is further configured to: not send the restoration command to the restoration module when judging that the counted number is less than the preset threshold.

The above master node can be further characterized in that:
a value of the preset period is greater than or equal to a sending period of the ring network health detection message and is less than or equal to a detection fail-period and a pre-forward period of a transmitting node.

The above master node can be further characterized in that:
the preset threshold is equal to 1.

The above master node can further comprise a primary port module;
the restoration module is configured to: after receiving the restoration command, restore a current state of the ring network to a Complete state, perform switching to the master node, block the secondary port module, refresh a forwarding table of the master node, and respectively send a flush message via the primary port module and the secondary port module to inform all transmitting nodes in the current ring network to perform switching.

After using the present invention, the EAPS ring network can reduce unnecessary switching caused by link quality reduction, which alleviates the loads of the ring network elements and increases the robustness of the EAPS ring network.

### Brief Description of Drawings

FIG. 1 is a networking architecture of the EAPS ring network in the existing technology according to the present invention;
FIG. 2 is a processing flow schematic diagram in which the secondary port of the master node receiving a hello detection message according to an example of the present invention;
FIG. 3 is a structural schematic diagram of the master node according to an example of the present invention.

### Preferred Embodiments of the Present Invention

The implementation method of the present invention will be further described in detail below.

The basic conception of the method of the present invention is: after receiving a hello message at the secondary port of the master node, if judging that the ring network in which the master node is located is in a Failed state currently, the master node starting to count the number of the ring network health detection messages received by the secondary port in a preset period, and if the counted number is greater than or equal to a preset threshold, performing a restoration switching operation.

Specifically, the protection switching method for the EAPS ring network provided by the present invention mainly comprises the following steps.
A. The master node additionally configures a pre-switching period and a pre-switching message threshold when configuring the EAPS node information;
   wherein, the value of the pre-switching message threshold is 1; the value of the pre-switching period should be determined by taking into consideration of the value condition of the three timers mentioned in the RFC3619 standard. The pre-switching period should not be less than the hello message sending period, because the master node can hardly receive the hello message in an excessively small interval; the pre-switching period also should not be greater than the detection fail-period, otherwise an disorder of the processing flow is easily caused; the pre-switching period also should not be greater than the pre-forward period of the transmitting node, because the transmitting node will firstly set the port connected with the link into a pre-forward state (i.e. logically blocking the port, and if the flush message of the master node is not received in the pre-forward period, voluntarily opening the port) in the condition of restoration after the link disconnection, and if the master node does not perform the switching operation in the pre-forward period, the ring network will be caused to form a ring logically and thus form a network storm. Taking a hello message sending interval of IT, a detection fail-period of 3T and a pre-forward period of 3T as an example, the value of the pre-switching period is suggested to be 2T, and the value of the pre-switching message threshold is suggested to be 1, that is, after receiving the hello message in a Failed state of the ring network, if the number of received hello messages is greater than or equal to 1 in the 2T period, the master node considers that the ring network has restored to the Complete state and the restoration switching can be performed; otherwise, continues to keep the Failed state.
B. After receiving the hello message at the secondary port of the master node, if judging that the ring network in which the master node is located is in a Complete state currently, the master node just needs to record the related counting information (such as the time of receiving the message, and the serial number of the message, etc.), and restarts a detection failure timer for detecting the next hello message, and step B is implemented again; if judging that the ring network is in a Failed state currently, step C is implemented;
C. A pre-switching timer is started, and the number of the hello detection messages received by the secondary port before the pre-switching timer times out is counted; wherein the timing period of the pre-switching timer is the pre-switching period configured in the step A;
D. When the time of the pre-switching timer is up, the count value of the message counter is compared with the pre-switching message threshold, and if the count value of the message counter is greater than or equal to the pre-switching message threshold, it is indicated that the ring network has restored to normal, and the master node performs the restoration switching operation; otherwise, it is considered that the ring network is still in the Failed state, and it does not need to perform restoration switching operation.

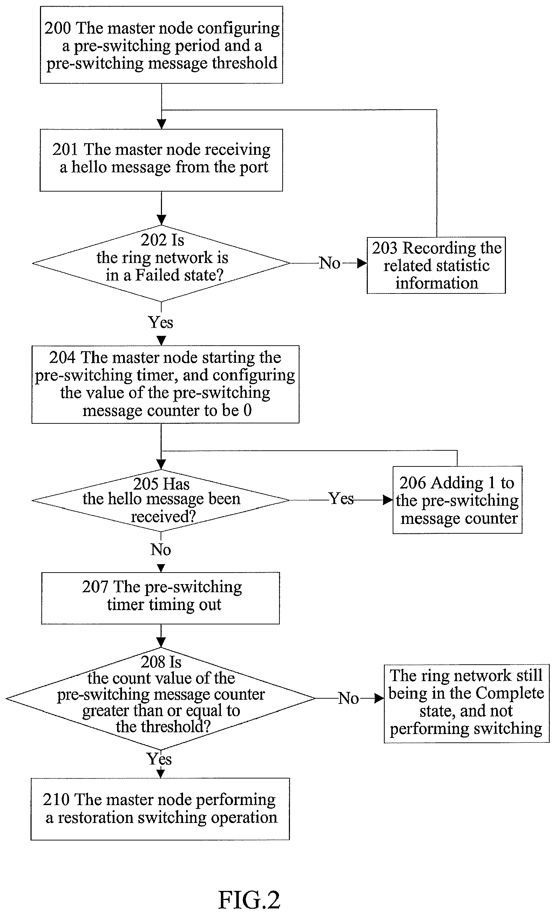

As shown in FIG. 2, the specific implementation flow after the master node receiving the hello message comprises the following steps.

In step 200: the EAPS master node additionally configures a pre-switching period and a pre-switching message threshold when configuring the node information.

In step 201: the master node implements step 202 when receiving a hello message at the secondary port S.

In step 202: the master node judges the current state of the ring network, and if the ring network is in a Complete state, step 203 is implemented; if the ring network is in a Failed state, step 204 is implemented.

In step 203: the master node records useful count information (such as the time of receiving the message and the serial number of the message), and restarts the hello message detection failure timer, the step 201 is implemented.

In step 204: the master node starts the pre-switching timer, the timing period of the pre-switching timer is precisely the preset pre-switching period, and the pre-switching message counter is configured to be 0.

In step 205: when receiving the hello message in the condition where the pre-switching timer does not time out, step 206 is implemented, and if the pre-switching timer times out, step 207 is implemented.

In step 206: every time a hello detection message is received, 1 is added to the pre-switching message counter, the step 205 is implemented.

In step 207: the master node detects that the pre-switching timer times out, and proceeds to step 208.

In step 208: the master node compares the count value of the pre-switching message counter with the pre-switching message threshold, and if the value of the counter is less than the threshold, it is indicated that the ring network state does not restore to normal, and step 209 is implemented; if the value of the counter is greater than or equal to the threshold, it is indicated that the ring network state restores to normal, step 210 is implemented.

In step 209: the ring network does not restore to the Complete state, the switching is not performed, the pre-switching message counter is cleared and the number of the received hello messages is not counted any more, and the flow ends.

In step 210: the master node performs the restoration switching operation, that is, restores the ring network state to the Complete, the master node performs the switching, blocks the secondary port of the master node, refreshes the forwarding table of the master node, and respectively sends the flush message via the primary port and secondary port to inform all the transmitting nodes in the current ring network to perform switching (refreshing the forwarding table, and relearning the MAC address).

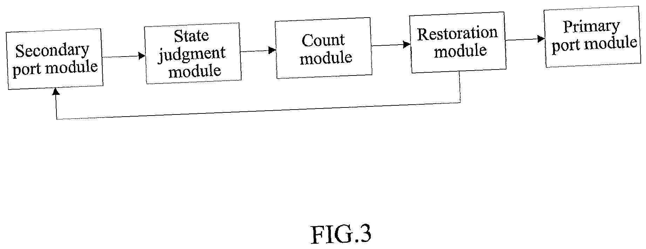

As shown in FIG. 3, the master node in the EAPS ring network according to the present invention comprises: a primary port module, a secondary port module, a state judgment module, a count module and a restoration module;
the secondary port module is configured to: initiate a state detection command to the state judgment module after receiving a ring network health detection message;
the state judgment module is configured to: judge the state of the ring network in which the master node is located currently after receiving the above state detection command; if judging that the ring network is in a Failed state currently, initiate a count command to the count module;
the count module is configured to: start to count the number of the ring network health detection messages received by the secondary port module in a preset period after receiving the above count command, and if judging that the counted number is greater than or equal to a preset threshold, initiate a restoration command to the restoration module; and it is further configured to: not send the restoration command to the restoration module when judging that the counted number is less than the preset threshold; wherein, preferably, the value of the preset period is greater than or equal to the sending period of the ring network health detection message and is less than or equal to the detection fail-period and pre-forward period of the transmitting node, and the preset threshold is equal to 1.

The restoration module is configured to: perform the restoration switching operation on the current ring network after receiving the above restoration command. Preferably, the restoration module being configured to perform the restoration switching operation on the ring network means that: the restoration module restores the current state of the ring network to a Complete state, performs switching on the master node, blocks the secondary port module, refreshes the forwarding table of the master node, and respectively sends a flush message via the primary port module and secondary port module to inform all the transmitting nodes in the current ring network to perform switching.

The ordinary person skilled in the art can understand that all or part of the steps in the above method can be completed through a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

### Industrial Applicability

After using the present invention, the EAPS ring network can reduce unnecessary switching caused by link quality reduction, which alleviates the loads of the ring network elements and increases the robustness of the EAPS ring network.

## Claims

1. A protection switching method for an Ethernet Automatic Protection Switching, EAPS, ring network, comprising:
in the condition of a link quality reduction, and of a message transmission with a time delay, after receiving (201) a ring network health detection message at a secondary port of a master node, upon judging (202) that the ring network in which the master node is located is in a failed state currently, the master node starting (204-207) to count a number of the ring network health detection messages received by the secondary port in a preset period, and upon the counted number being (208) greater than or equal to a preset threshold, performing (210) a restoration switching operation;
wherein a value of the preset period is greater than or equal to a sending period of the ring network health detection message and is less than or equal to a detection fail-period and a pre-forward period of a transmitting node.

2. The method according to claim 1, further comprising:
if judging that the counted number is less than the preset threshold, the master node not performing (209) the restoration switching operation.

3. The method according to any of claims 1 to 2, wherein,
the preset threshold is equal to 1.

4. The method according to claim 1 or 2, wherein, the step of the master node performing (210) the restoration switching operation comprises: the master node restoring a current state of the ring network to a complete state, the master node performing switching, blocking the secondary port, refreshing a forwarding table of the current node, and respectively sending a flush message via a primary port and the secondary port to inform all transmitting nodes in the current ring network to perform switching.

5. A master node adapted to be used in an Ethernet Automatic Protection Switching, EAPS, ring network, comprising: a secondary port module, a state judgment module, a count module and a restoration module;
the secondary port module is configured to: in the condition of a link quality reduction, and of a message transmission with a time delay, initiate a state detection command to the state judgment module after receiving a ring network health detection message;
the state judgment module is configured to: judge a state of the ring network in which the master node is located currently after receiving the state detection command; upon judging that the ring network is in a failed state currently, initiate a count command to the count module;
the count module is configured to: start to count a number of the ring network health detection messages received by the secondary port module in a preset period after receiving the count command, and upon judging that the counted number is greater than or equal to a preset threshold, initiate a restoration command to the restoration module;
the restoration module is configured to: perform a restoration switching operation on the ring network after receiving the restoration command;
wherein a value of the preset period is greater than or equal to a sending period of the ring network health detection message and is less than or equal to a detection fail-period and a pre-forward period of a transmitting node.

6. The master node according to claim 5, wherein,
the count module is further configured to: not send the restoration command to the restoration module when judging that the counted number is less than the preset threshold.

7. The master node according to any of claims 5 to 6, wherein,
the preset threshold is equal to 1.

8. The master node according to claim 5 or 6, wherein, the master node further comprises a primary port module;
the restoration module is configured to: after receiving the restoration command, restore a current state of the ring network to a complete state, perform switching to the master node, block the secondary port module, refresh a forwarding table of the master node, and respectively send a flush message via the primary port module and the secondary port module to inform all transmitting nodes in the current ring network to perform switching.

## Patentansprüche

1. Schutzschaltverfahren für ein EAPS(Ethernet Automatic Protection Switching)-Ringnetz, das Folgendes beinhaltet:
in dem Zustand einer Verbindungsqualitätsreduktion und einer Nachrichtenübertragung mit Zeitverzögerung, nach Empfangen (201) einer Ringnetzgesundheitsdetektionsnachricht an einem sekundären Port eines Masterknotens, beim Beurteilen (202), dass sich das Ringnetz, in dem sich der Masterknoten befindet, aktuell in einem ausgefallenen Zustand befindet, Starten (204-207), durch den Masterknoten, eine Anzahl der Ringnetzgesundheitsdetektionsnachrichten zu zählen, die von dem sekundären Port in einem vorgegebenen Zeitraum empfangen werden, und wenn die gezählte Anzahl größer als ein vorgegebener oder gleich einem vorgegebenen Schwellenwert ist (208), Durchführen (210) eines Wiederherstellungsschaltvorgangs;
wobei ein Wert des vorgegebenen Zeitraums größer als ein oder gleich einem Sendezeitraum der Ringnetzgesundheitsdetektionsnachricht ist und geringer als ein oder gleich einem Detektion-Ausfall-Zeitraum und ein/einem Vor-Weiterleitungs-Zeitraum eines übertragenden Knotens ist.

2. Verfahren gemäß Anspruch 1, das ferner Folgendes beinhaltet:
falls beurteilt wird, dass die gezählte Anzahl geringer als der vorgegebene Schwellenwert ist, Nichtdurchführen (209), durch den Masterknoten, des Wiederherstellungsschaltvorgangs.

3. Verfahren gemäß einem der Ansprüche 1 bis 2, wobei der vorgegebene Schwellenwert gleich 1 ist.

4. Verfahren gemäß Anspruch 1 oder 2, wobei der Schritt des Durchführens (210), durch den Masterknoten, des Wiederherstellungsschaltvorgangs Folgendes beinhaltet: Wiederherstellen, durch den Masterknoten, eines aktuellen Zustands des Ringnetzes auf einen vollständigen Status, Durchführen, durch den Masterknoten, des Schaltens, Blockieren des sekundären Ports, Aktualisieren einer Weiterleitungstabelle des aktuellen Knotens und jeweiliges Senden einer Flush-Nachricht über einen primären Port und den sekundären Port, um alle übertragenden Knoten im aktuellen Ringnetz zu informieren, das Schalten durchzuführen.

5. Masterknoten, der angepasst ist, um in einem EAPS(Ethernet Automatic Protection Switching)-Ringnetz verwendet zu werden, der Folgendes beinhaltet: ein sekundäres Port-Modul, ein Statusbeurteilungsmodul, ein Zählmodul und ein Wiederherstellungsmodul;
wobei das sekundäre Port-Modul für Folgendes konfiguriert ist: in dem Zustand einer Verbindungsqualitätsreduktion und einer Nachrichtenübertragung mit Zeitverzögerung, Initiieren eines Statusdetektionsbefehls an das Statusbeurteilungsmodul nach Empfangen einer Ringnetzgesundheitsdetektionsnachricht;
wobei das Statusbeurteilungsmodul für Folgendes konfiguriert ist: Beurteilen eines Status des Ringnetzes, in dem sich der Masterknoten aktuell befindet, nach Empfangen des Statusdetektionsbefehls; beim Beurteilen, dass sich das Ringnetz aktuell in einem ausgefallenen Zustand befindet, Initiieren eines Zählbefehls an das Zählmodul;
wobei das Zählmodul für Folgendes konfiguriert ist: Starten, eine Anzahl der Ringnetzgesundheitsdetektionsnachrichten zu zählen, die von dem sekundären Port-Modul in einem vorgegebenen Zeitraum empfangen werden, nach Empfangen des Zählbefehls, und beim Beurteilen, dass die gezählte Anzahl größer als ein vorgegebener oder gleich einem vorgegebenen Schwellenwert ist, Initiieren eines Wiederherstellungsbefehls an das Wiederherstellungsmodul;
wobei das Wiederherstellungsmodul für Folgendes konfiguriert ist: Durchführen eines Wiederherstellungsschaltvorgangs an dem Ringnetz nach Empfangen des Wiederherstellungsbefehls;
wobei ein Wert des vorgegebenen Zeitraums größer als ein oder gleich einem Sendezeitraum der Ringnetzgesundheitsdetektionsnachricht ist und geringer als ein oder gleich einem Detektion-Ausfall-Zeitraum und ein/einem Vor-Weiterleitungs-Zeitraum eines übertragenden Knotens ist.

6. Masterknoten gemäß Anspruch 5, wobei das Zählmodul ferner für Folgendes konfiguriert ist: nicht Senden des Wiederherstellungsbefehls an das Wiederherstellungsmodul, wenn beurteilt wird, dass die gezählte Anzahl weniger als der vorgegebene Schwellenwert ist.

7. Masterknoten gemäß einem der Ansprüche 5 bis 6, wobei der vorgegebene Schwellenwert gleich 1 ist.

8. Masterknoten gemäß Anspruch 5 oder 6, wobei der Masterknoten ferner ein primäres Port-Modul beinhaltet;
wobei das Wiederherstellungsmodul für Folgendes konfiguriert ist: nach Empfangen des Wiederherstellungsbefehls, Wiederherstellen eines aktuellen Status des Ringnetzes auf einen vollständigen Status, Durchführen des Schaltens auf den Masterknoten, Blockieren des sekundären Port-Moduls, Aktualisieren einer Weiterleitungstabelle des Masterknotens und jeweiliges Senden einer Flush-Nachricht über das primäre Port-Modul und das sekundäre Port-Modul, um alle übertragenden Knoten im aktuellen Ringnetz zu informieren, das Schalten durchzuführen.

## Revendications

1. Procédé de commutation de protection pour un réseau en anneau à commutation de protection automatique Ethernet (EAPS), consistant à :
en cas de réduction de qualité de liaison et d'une émission de message avec un retard, après la réception (201) d'un message de détection d'intégrité de réseau en anneau au niveau d'un port secondaire d'un noeud maître quand il est déterminé (202) que le réseau en anneau où se trouve le noeud maître est actuellement dans un état de panne, démarrer (204-207), par le noeud maître, le comptage d'un nombre de messages de détection d'intégrité de réseau en anneau reçus par le port secondaire pendant une période prédéfinie, et quand le nombre compté est (208) supérieur ou égal à un seuil prédéfini, réaliser (210), par le noeud maître, une opération de commutation de restauration ;
une valeur de la période prédéfinie étant supérieure ou égale à une période d'envoi du message de détection d'intégrité de réseau en anneau et étant inférieure ou égale à une période d'échec de détection et à une période préalable à un transfert d'un noeud d'émission.

2. Procédé selon la revendication 1, consistant en outre à :
s'il est déterminé que le nombre compté est inférieur au seuil prédéfini, ne pas réaliser (209), par le noeud maître, l'opération de commutation de restauration.

3. Procédé selon l'une quelconque des revendications 1 et 2, dans lequel le seuil prédéfini est égal à 1.

4. Procédé selon la revendication 1 ou 2, dans lequel l'étape consistant à réaliser (210), par le noeud maître, l'opération de commutation de restauration, consiste à :
par le noeud maître, restaurer un état courant du réseau en anneau à un état complet, et par le noeud maître, réaliser une commutation, bloquer le port secondaire, actualiser une table de transfert du noeud courant, et envoyer respectivement un message de vidage par l'intermédiaire d'un port principal et du port secondaire pour annoncer à tous les noeuds d'émission dans le réseau en anneau courant de la réalisation d'une commutation.

5. Noeud maître conçu pour être utilisé dans un réseau en anneau à commutation de protection automatique Ethernet (EAPS), comprenant : un module de port secondaire, un module de détermination d'état, un module de comptage et un module de restauration ;
le module de port secondaire étant configuré pour : en cas de réduction de qualité de liaison et d'une émission de message avec un retard, amorcer une commande de détection d'état dans le module de détermination d'état après la réception d'un message de détection d'intégrité de réseau en anneau ;
le module de détermination d'état étant configuré pour : déterminer un état du réseau en anneau où se trouve actuellement le noeud maître après la réception de la commande de détection d'état ; quand il est déterminé que le réseau en anneau est actuellement dans un état de panne, amorcer une commande de comptage dans le module de comptage ;
le module de comptage étant configuré pour : démarrer le comptage d'un nombre de messages de détection d'intégrité de réseau en anneau reçus par le module de port secondaire pendant une période prédéfinie après la réception de la commande de comptage, et quand il est déterminé que le nombre compté est supérieur ou égal à un seuil prédéfini, amorcer une commande de restauration dans le module de restauration ;
le module de restauration étant configuré pour : réaliser une opération de commutation de restauration sur le réseau en anneau après la réception de la commande de restauration ;
une valeur de la période prédéfinie étant supérieure ou égale à une période d'envoi du message de détection d'intégrité de réseau en anneau et étant inférieure ou égale à une période d'échec de détection et à une période préalable à un transfert d'un noeud d'émission.

6. Noeud maître selon la revendication 5, dans lequel le module de comptage est en outre configuré pour : ne pas envoyer la commande de restauration au module de restauration quand il est déterminé que le nombre compté est inférieur au seuil prédéfini.

7. Noeud maître selon l'une quelconque des revendications 5 et 6, dans lequel le seuil prédéfini est égal à 1.

8. Noeud maître selon la revendication 5 ou 6, le noeud maître comprenant en outre un module de port principal ;
le module de restauration étant configuré pour : après la réception de la commande de restauration, restaurer un état courant du réseau en anneau à un état complet, réaliser une commutation dans le noeud maître, bloquer le module de port secondaire, actualiser une table de transfert du noeud maître, et envoyer respectivement un message de vidage par l'intermédiaire du module de port principal et du module de port secondaire pour annoncer à tous les noeuds d'émission dans le réseau en anneau courant de la réalisation d'une commutation.
